# EUROPÄISCHE PATENTANMELDUNG

(11) **EP 4 663 522 A2**
(43) Veröffentlichungstag der Anmeldung: **17.12.2025**
(21) Anmeldenummer: 25213349.1
(22) Anmeldetag: 30.03.2020
(51) Int. Cl.: B62D 55/14

(54) **GUMMIRAUPENFAHRWERK**

(62) Teilanmeldung aus: 20166575.9
(71) Anmelder: Joseph Vögele AG, 67067 Ludwigshafen (DE)
(72) Erfinder: ERDTMANN, Bernhard, 68309 Mannheim (DE)
(74) Vertreter: Grünecker Patent- und Rechtsanwälte PartG mbB

(57) **Zusammenfassung**

Gummiraupenfahrwerk (1), insbesondere für einen Straßenfertiger (2) oder ein Beschickerfahrzeug (3), umfassend wenigstens ein Antriebsrad (4) und wenigstens ein Umlenkrad (5), die zusammen mit paarweise angeordneten Rädern (4, 5, 6) und einer Gummiraupe (7) an einem Träger (8) platziert sind, wobei die Räder (4, 5, 6) Felgen (9) aufweisen, und wobei auf einer Umfangsfläche (U) der Felgen (9) der Räder (4, 5, 6) eine Gummierung (G) angebracht ist, wobei auf einer Innenseite der Gummiraupe (7) ein Führungsnocken (10) vorgesehen ist, der dazu konfiguriert ist, in einen zwischen zwei nebeneinanderliegenden Rädern (4, 5, 6) vorliegenden Zwischenraum (Z) einzudringen, wobei eine dem Führungsnocken (10) zugewandte Anlauffläche (A) der Räder (4, 5, 6) einen lösbar an den Felgen (9) angebrachten Einsatz (11) aufweist, wobei der Einsatz (11) um die Achse (13) des Rades (4, 5, 6) relativ zu der Felge (9) drehbar ist.

## Beschreibung

Die vorliegende Erfindung bezieht sich auf ein Gummiraupenfahrwerk, insbesondere für einen Straßenfertiger oder ein Beschickerfahrzeug, gemäß dem Oberbegriff des Anspruchs 1.

Bei einem Straßenfertiger oder Beschicker ist herkömmlicherweise unterseitig an jeder Seite ein Gummiraupenfahrwerk vorgesehen. Ein Gummiraupenfahrwerk enthält üblicherweise ein Antriebsradpaar sowie ein Leitradpaar, die zusammen mit Stützrädern an eine Tragkonstruktion angebunden sind. Eine Gummiraupe umschlingt die Räder. Die Stützräder sind paarweise an einer Wippe angeordnet und weisen Felgen auf, welche die seitliche Führungsfunktion an den Führungsnocken der Gummiraupe realisiert. Auf die Felgen ist eine Gummierung der Stützräder, Antriebsräder sowie Leiträder aufgebracht, auf der das Rad abrollt. Die Problematik heutzutage besteht darin, dass die Reibung zwischen den Felgen der Räder und den Führungsnocken Wärme in die Räder induziert. Diese Hitzeentwicklung, besonders bei längeren Transportfahrten, schadet der Gummierung der Räder. Noch ein weiteres Problem ist die Korrosion der der Gummiraupe zugewandten Anlaufflächen der einzelnen Räder, denn die durch die Korrosion entstehende Rauheit an den Anlaufflächen der Räder schädigt im Betrieb die Führungsnocken der Gummiraupe.

Aufgabe der Erfindung ist es, die oben genannten Probleme zu beseitigen.

Gelöst wird diese Aufgabe durch ein Gummiraupenfahrwerk mit den Merkmalen des Anspruchs 1. Vorteilhafte Weiterbildungen der Erfindung sind in den Unteransprüchen angeführt.

Das erfindungsgemäße Gummiraupenfahrwerk, insbesondere für einen Straßenfertiger oder ein Beschickerfahrzeug, umfasst wenigstens ein Antriebsrad und wenigstens ein Umlenkrad, die zusammen mit paarweise angeordneten Stützrädern und einer Gummiraupe an einem Träger platziert sind, wobei die Räder Felgen aufweisen, und wobei auf einer Umfangsfläche der Felgen der Räder eine Gummierung angebracht ist, wobei auf einer Innenseite der Gummiraupe ein Führungsnocken vorgesehen ist, der dazu konfiguriert ist, in einen zwischen zwei nebeneinanderliegenden Stützrädern vorliegenden Zwischenraum einzudringen, wobei eine dem Führungsnocken zugewandte Anlauffläche der Räder einen lösbar an den Felgen angebrachten Einsatz aufweist.

Dadurch entsteht die Möglichkeit, die Räder lageabhängig zu gestalten und eine reibungsarme Materialpaarung zwischen der Führungsnocke der Gummiraupe und der Felge zur Verfügung zu stellen, indem der Einsatz an der Reibstelle der Felgen mit den Führungsnocken mit unterschiedlichen Werkstoffen eingesetzt werden kann, wobei der Rest der Felge in kostengünstiger Weise aus z.B. Gusseisen hergestellt werden kann. Durch die Reduzierung der Reibung wird auch die induzierte Wärme in den einzelnen Rädern reduziert, was z.B. bei längeren Transportfahrten die Hitzeentwicklung an den Übergangsstellen der Gummierung verringert. Der Einsatz bietet auch die Möglichkeit, durch ein gering-wärmeleitfähiges Einsatzmaterial eine thermische Entkopplung an dem Reibpaar unterzubringen. Es ist möglich, dass der gesamte Einsatz oder nur ein Teil des Einsatzes ein gering wärmeleitfähiges Material aufweist.

In einer bevorzugten Variante ist der Einsatz an den Felgen werkzeuglos lösbar angebracht. Dies ermöglicht einen einfachen Um- und Anbau der Einsätze an den Felgen.

Besonders vorteilhaft ist es, wenn der Einsatz sich radial über die Umfangsfläche der Felgen hinaus erstreckt. Dadurch wird nicht nur die Reibung zwischen der Felge und der Gummiraupe, sondern auch die seitliche Reibung zwischen der Gummierung der Stützräder und der Gummiraupe reduziert.

Vorzugsweise beinhaltet der Einsatz ein Kunststoffmaterial. Da Kunststoffe grundsätzlich eine geringere Härte als Stahl oder Eisen aufweisen, bieten Kunststoffe eine Reibreduzierung in der Reibpaarung der Stützräder mit der Gummiraupe. Zusätzlich bieten Kunststoffe ebenfalls Korrosionsschutz für die der Gummiraupe zugewandte Anlauffläche der Räder.

Bevorzugt ist eine Shore-B-Härte des Kunststoffmaterials von wenigstens 50, sodass der Einsatz mit einer GummiGummiraupe ein reibarmes Reibpaar bildet.

In einer vorteilhaften Ausführungsvariante ist das Kunststoffmaterial im Wesentlichen härter als die Gummiraupe. Dadurch wird die Verringerung der Reibung und der induzierten Reibhitze in den Rädern optimiert.

In einer bevorzugten Ausführungsvariante ist das Kunststoffmaterial im Wesentlichen härter als die Gummierung der Räder. Dies ist besonders vorteilhaft, um die Reibung zwischen den Rädern und den Führungsnocken der Gummiraupe zu reduzieren.

Bevorzugt ist der Einsatz aus einem Material gebildet, das einen geringeren Wärmeleitkoeffizienten als Stahl oder Eisen aufweist. Dadurch wird die durch die Reibung induzierte Wärme reduziert und die Lebensdauer der Gummierung der Räder sowie der Führungsnocken der Gummiraupe erhöht. In einer vorteilhaften Ausführungsvariante beinhaltet der Einsatz ein Edelstahlmaterial. Dies bietet einen weiteren Korrosionsschutz für die Anlauffläche der Räder.

In einer weiteren Ausführungsvariante weist der Einsatz eine Schmierung auf, wodurch die Reibung und Hitze an den Rädern der Gummiraupe reduziert wird.

Im Folgenden werden Ausführungsbeispiele der Erfindung anhand der Figuren näher beschrieben. Dabei zeigen
- Fig. 1: eine Seitenansicht eines Straßenfertigers mit einem Gummiraupenfahrwerk;
- Fig. 2: eine perspektivische Ansicht eines Beschickerfahrzeugs mit einem Gummiraupenfahrwerk;
- Fig. 3: eine perspektivische Ansicht eines Gummiraupenfahrwerks;
- Fig. 4: eine perspektivische Darstellung eines Teils des Gummiraupenfahrwerks;
- Fig. 5: eine Seitenansicht eines Rades des Gummiraupenfahrwerks mit einem sich über die Umfangsfläche einer Felge hinaus erstreckenden Einsatz;
- Fig. 6: eine Seitenansicht eines Rades des Gummiraupenfahrwerks mit einem sich über die Umfangsfläche einer Felge hinaus erstreckenden Einsatz in Form eines frei drehbaren Rings;
- Fig. 7: eine Seitenansicht eines Rades des Gummiraupenfahrwerks mit einem sich über die Umfangsfläche einer Felge hinaus erstreckenden und verlängerten Einsatz;
- Fig. 8: eine Seitenansicht eines Rades des Gummiraupenfahrwerks mit einem sich über die Umfangsfläche einer Felge hinaus erstreckenden Einsatz und eine Materialschicht.

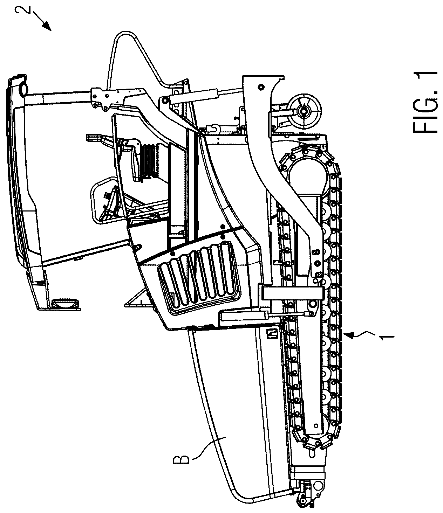

Figur 1 zeigt einen Straßenfertiger 2 zur Herstellung eines Straßenbelags. Der Straßenfertiger 2 umfasst ein Gummiraupenfahrwerk 1.

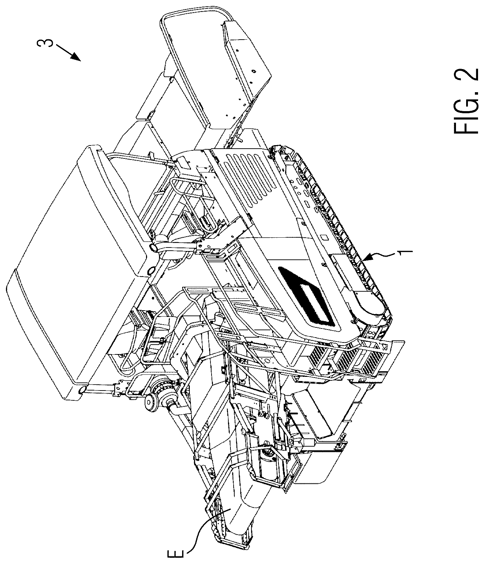

Figur 2 zeigt ein Beschickerfahrzeug 3, das über ein Endlosförderband E dem Gutbunker B eines Straßenfertigers 2 eine Asphaltmischung oder ein anderes auf die Straße aufbringendes Material zuführen kann. Auch das Beschickerfahrzeug 3 weist ein Gummiraupenfahrwerk 1 auf.

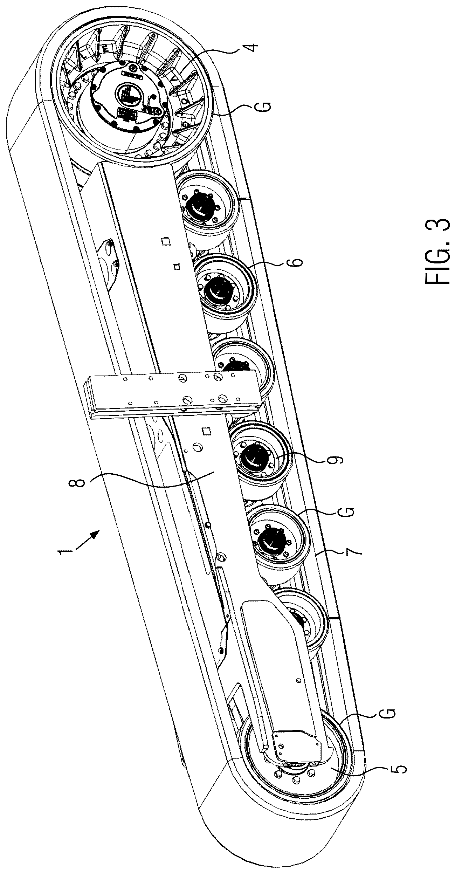

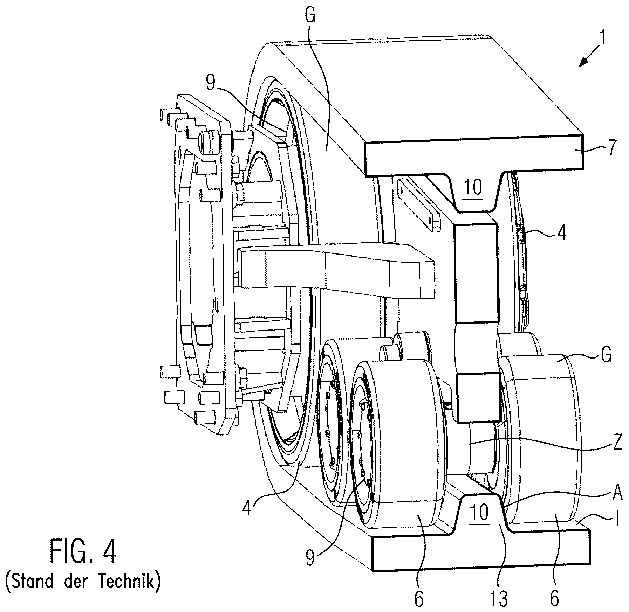

Figur 3 zeigt das Gummiraupenfahrwerk 1. Das Gummiraupenfahrwerk 1 enthält Antriebsräder 4 und Umlenkräder 5. Auf die Antriebsräder 4 und die Umlenkräder 5 ist eine Gummiraupe 7 gespannt. Das Gummiraupenfahrwerk 1 weist weiterhin einen Träger 8 auf, durch den das Gummiraupenfahrwerk 1 am Straßenfertiger 2 oder am Beschickerfahrzeug 3 befestigt ist. Figur 3 zeigt weiterhin seitlich hintereinander angeordnete Stützräder 6, die zwischen dem Antriebsrad 4 und dem Umlenkrad 5 liegen, um das Laufen der Gummiraupe 7 zu unterstützen. Die Antriebsräder 4, die Umlenkräder 5 und die Stützräder 6 sind paarweise an einer Wippe 13 (siehe Figur 4) angeordnet.

Jedes Rad 4, 5, 6 weist eine maschinell bearbeitete Felge 9 auf, auf welcher eine Gummierung G angebracht ist, auf der die Räder 4, 5, 6 abrollen. Es ist möglich, dass der Gummistoff der Gummiraupe 7 und die Gummierung G der Räder 4, 5, 6 die gleiche Gummisorte beinhalten. Es ist auch möglich, dass der Gummistoff der Gummiraupe 7 und die Gummierung G der Räder 4, 5, 6 unterschiedliche Gummisorten beinhalten und unterschiedliche Materialeigenschaften aufweisen.

Figur 4 zeigt einen Teil des Gummiraupenfahrwerks 1 mit Antriebsrädern 4 und Stützrädern 6.

Gemäß dem Stand der Technik können die Felgen 9 der Räder 6 in einteiliger Bauweise aus Gusseisen hergestellt sein und zwischen zwei Stützrädern 6 ist ein Zwischenraum Z vorgesehen. In diesen Zwischenraum Z dringt ein Führungsnocken 10 der Gummiraupe 7 ein, der an der Innenseite I der Gummiraupe 7 angeordnet ist. Die Stützräder 6 weisen dem Führungsnocken 10 zugewandte Anlaufflächen A auf, die mit der Gummiraupe 7 ein Reibpaar bilden.

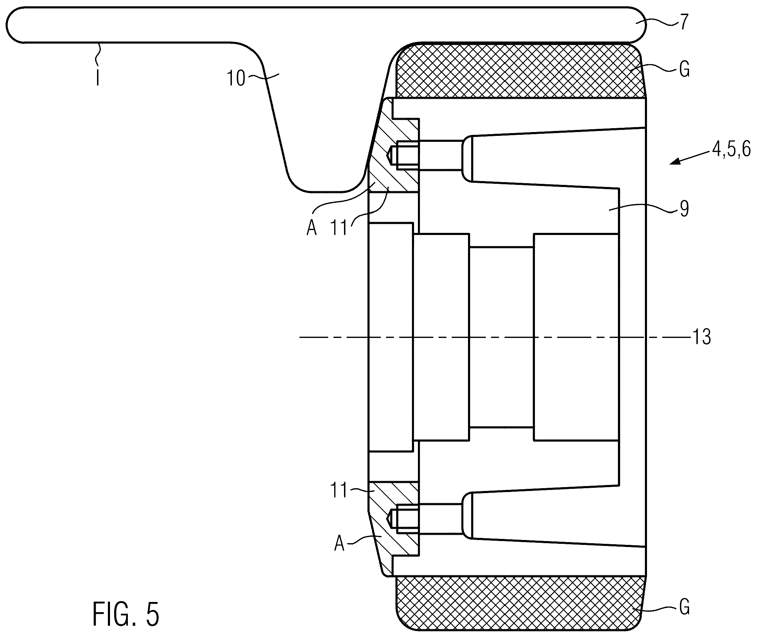

Figur 5 zeigt einen Vertikalschnitt eines erfindungsgemäßen Rades 4, 5, 6 und Führungsnocken 10 der Gummiraupe 7 auf deren Innenseite I. An der den Führungsnocken 10 zugewandten Anlauffläche A der Räder 4, 5, 6 ist an den Felgen 9 ein Einsatz 11 vorgesehen. Der Einsatz 11 ist an den Felgen 9 lösbar angebracht. Der Einsatz 11 kann an die Felgen geschraubt werden. Es ist auch möglich, den Einsatz 11 an den Felgen 9 werkzeuglos anzubringen.

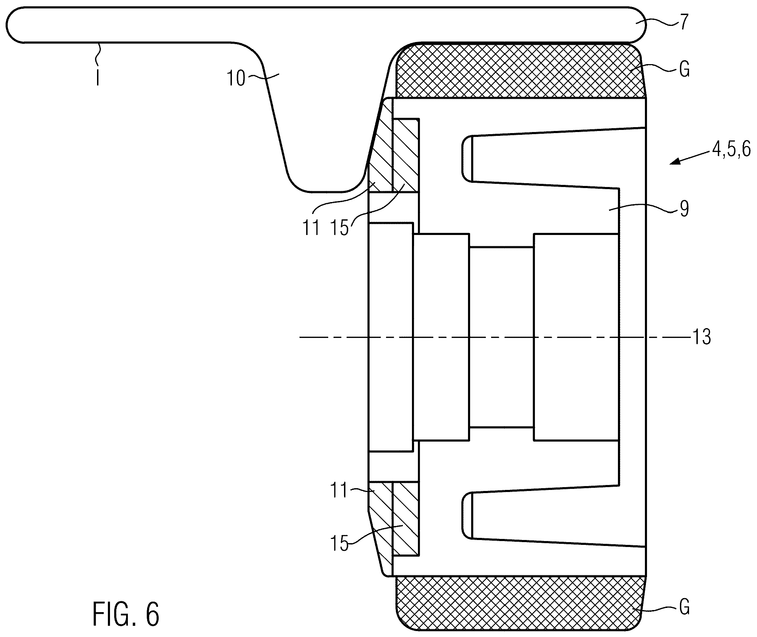

In einer alternativen Ausführungsform ist der Einsatz 11 um die Achse 13 des Rades 4, 5, 6 sowie relativ zu der jeweiligen Felge drehbar. Wie in Figur 6 gezeigt, kann der Einsatz 11 in dieser Ausführungsform als ein frei drehbarer Ring gestaltet werden. Es ist auch möglich, zwischen der Felge 9 und dem Einsatz 11 ein Gleitmaterial 15 anzubringen. Insbesondere Materialien mit relativ geringem Wärmeleitfähigkeitskoeffizient gegenüber der Felge 9 und/oder dem Einsatz 11 können für das Gleitmaterial 15 verwendet werden, um eine Temperaturentkopplung zwischen dem Einsatz 11 und der Felge 9 zu bilden. Das Gleitmaterial 15 hat auch die Funktion, die temperatur- und reibungsinduzierte Wärme zwischen der Felge 9 und dem Einsatz 11 zu verringern. Insbesondere Kunststoffmaterialien wie Polyamid oder PTFE (Polytetrafluorethylen) können für das Gleitmaterial 15 verwendet werden.

Der Einsatz 11 kann Kunststoffmaterial beinhalten, um ein besseres Reibpaar mit der Gummiraupe 7 zu bilden. Insbesondere harte Kunststoffmaterialien können für den Einsatz 11 verwendet werden. Das Kunststoffmaterial des Einsatzes 11 kann wenigstens eine Shore B-Härte 50 aufweisen. Des Weiteren weist das Kunststoffmaterial des Einsatzes 11 vorzugsweise im Wesentlichen Minimum die gleiche Härte wie der Gummistoff der Gummiraupe 7 oder wie die Gummierung G der Räder 4, 5, 6 auf. Es ist auch möglich, dass der Einsatz 11 Edelstahlmaterial beinhaltet. Das Einsatzmaterial kann einen geringeren Wärmeleitkoeffizienten als Gusseisen aufweisen. Um eine reibungsarme Materialpaarung zwischen der Gummiraupe 7 und den Rädern 4, 5, 6 zu bilden, ist es auch möglich, den Einsatz 11 mit einem Schmierstoff, insbesondere mit einem Trockenschmierstoff, oder einem Gleitlack aus Polytetrafluorethylen oder Grafit zu schmieren.

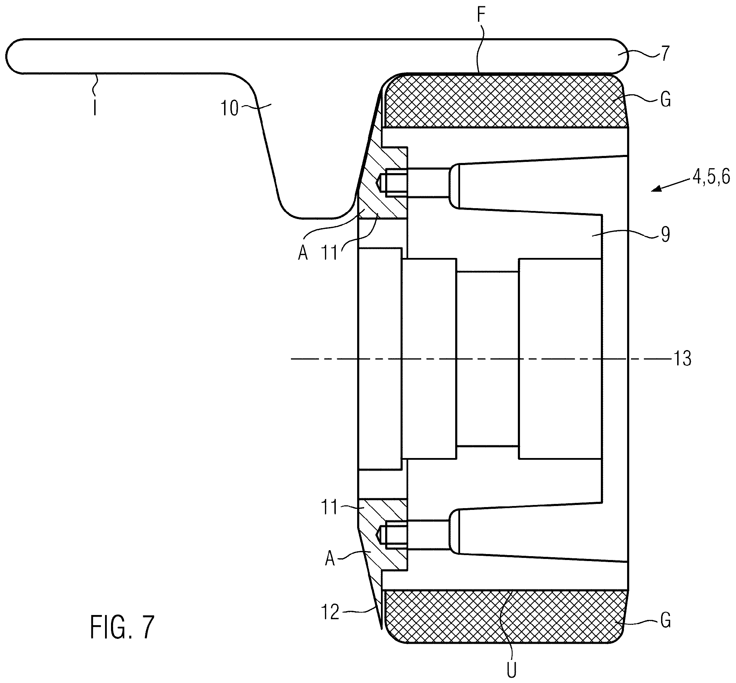

Wie in Figur 7 gezeigt, kann der Einsatz 11 über die Umfangsfläche U der Felge 9 zu der Führungsfläche F der Gummiraupe 7 verlängert werden. Diese Verlängerung kann mit dem Einsatz 11 einstückig gebildet, oder als ein Einsatzmodul 12 an dem Einsatz 11 angebracht werden. Der Einsatz 11 und das Einsatzmodul 12 können gleiche sowie unterschiedliche Materialien beinhalten.

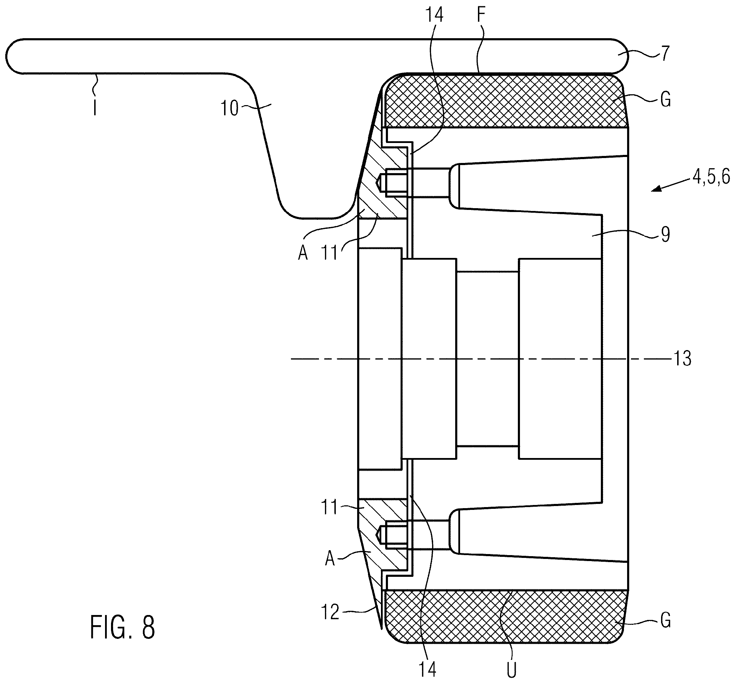

Alternativ ist es möglich, zwischen dem Einsatz 11 und der Felge 9 eine Materialschicht 14 anzubringen. Dies ist in Fig. 8 illustriert. Die Materialschicht 14 kann ein Edelstahlring sein. Es ist auch möglich die Materialschicht aus einem Material zu bilden, das einen geringeren Wärmeleitkoeffizienten als der Einsatz 11 und/oder als Gusseisen aufweist.

Die Offenbarung umfasst des Weiteren die folgenden Ausführungsbeispiele:
AB1: Gummiraupenfahrwerk, insbesondere für einen Straßenfertiger oder ein Beschicker-fahrzeug, umfassend ein Antriebsradpaar und ein Umlenkradpaar, die zusammen mit paarweise angeordneten Stützrädern und einer Gummiraupe an einem Träger platziert sind, wobei die Räder Felgen aufweisen, und wobei auf einer Umfangsfläche der Felgen der Räder eine Gummierung angebracht ist, wobei auf einer Innenseite der Gummiraupe ein Führungsnocken vorgesehen ist, der dazu konfiguriert ist, in einen zwischen zwei nebeneinanderliegenden Rädern vorliegenden Zwischenraum einzudringen, wobei eine dem Führungsnocken zugewandte Anlauffläche der Räder einen lösbar an der jeweiligen Felge angebrachten Einsatz aufweist.
AB2: Gummiraupenfahrwerk nach Ausführungsbeispiel AB1, wobei der Einsatz an der Felge werkzeuglos lösbar angebracht ist.
AB3: Gummiraupenfahrwerk nach Ausführungsbeispiel AB1, wobei der Einsatz um die Achse des Rades relativ zu der Felge drehbar ist.
AB4: Gummiraupenfahrwerk nach einem der vorhergehenden Ausführungsbeispiele, wobei der Einsatz sich radial über die Umfangsfläche der Felge hinaus erstreckt.
AB5: Gummiraupenfahrwerk nach einem der vorhergehenden Ausführungsbeispiele, wobei der Einsatz ein Kunststoffmaterial beinhaltet.
AB6: Gummiraupenfahrwerk nach Ausführungsbeispiel AB5, wobei eine Shore B-Härte des Kunststoffmaterials wenigstens 50 ist
AB7: Gummiraupenfahrwerk nach Ausführungsbeispiel AB5 oder AB6, wobei das Kunststoffmaterial im Wesentlichen härter als die Gummiraupe ist
AB8: Gummiraupenfahrwerk nach einem der Ausführungsbeispiele AB5 bis AB7, wobei das Kunststoffmaterial im Wesentlichen härter als die Gummierung der Räder ist.
AB9: Gummiraupenfahrwerk nach einem der vorhergehenden Ausführungsbeispiele, wobei der Einsatz aus einem Material gebildet ist, das einen geringeren Wärmeleitkoeffizienten als Gusseisen hat.
AB10: Gummiraupenfahrwerk nach einem der Ausführungsbeispiele AB1 bis AB8, wobei der Einsatz ein Edelstahlmaterial beinhaltet.
AB11: Gummiraupenfahrwerk nach einem der vorhergehenden Ausführungsbeispiele, wobei der Einsatz eine Schmierung aufweist.
AB12: Gummiraupenfahrwerk nach einem der vorhergehenden Ausführungsbeispiele, wobei der Einsatz eine Eigenschmierung aufweist.
AB13: Gummiraupenfahrwerk nach einem der vorhergehenden Ausführungsbeispiele, wobei der Einsatz Graphit aufweist.
AB14: Gummiraupenfahrwerk nach einem der vorhergehenden Ausführungsbeispiele, wobei eine Materialschicht zwischen dem Einsatz und der Felge vorgesehen ist, wobei die Materialschicht aus einem Material gebildet ist, welches einen geringeren Wärmeleitkoeffizienten als der Einsatz oder als Gusseisen hat.
AB15: Baumaschine in Form eines Straßenfertigers oder in Form eines Beschickerfahrzeugs, die ein Gummiraupenfahrwerk nach einem der vorangehenden Ausführungsbeispiele aufweist.

## Patentansprüche

1. Gummiraupenfahrwerk (1), insbesondere für einen Straßenfertiger (2) oder ein Beschickerfahrzeug (3), umfassend ein Antriebsradpaar (4) und ein Umlenkradpaar (5), die zusammen mit paarweise angeordneten Stützrädern (6) und einer Gummiraupe (7) an einem Träger (8) platziert sind, wobei die Räder (4, 5, 6) Felgen (9) aufweisen, und wobei auf einer Umfangsfläche (U) der Felgen (9) der Räder (4, 5, 6) eine Gummierung (G) angebracht ist, wobei auf einer Innenseite (I) der Gummiraupe (7) ein Führungsnocken (10) vorgesehen ist, der dazu konfiguriert ist, in einen zwischen zwei nebeneinanderliegenden Rädern (4, 5, 6) vorliegenden Zwischenraum (Z) einzudringen, wobei eine dem Führungsnocken (10) zugewandte Anlauffläche (A) der Räder (4, 5, 6) einen lösbar an der jeweiligen Felge (9) angebrachten Einsatz (11) aufweist, **dadurch gekennzeichnet, dass,** der Einsatz (11) um die Achse (13) des Rades (4, 5, 6) relativ zu der Felge (9) drehbar ist.

2. Gummiraupenfahrwerk nach Anspruch 1, **dadurch gekennzeichnet, dass** der Einsatz (11) an der Felge (9) werkzeuglos lösbar angebracht ist.

3. Gummiraupenfahrwerk nach einem der vorangehenden Ansprüche, **dadurch gekennzeichnet, dass** der Einsatz (11) sich radial über die Umfangsfläche (U) der Felge (9) hinaus erstreckt.

4. Gummiraupenfahrwerk nach einem der vorangehenden Ansprüche, **dadurch gekennzeichnet, dass** der Einsatz (11) ein Kunststoffmaterial beinhaltet.

5. Gummiraupenfahrwerk nach Anspruch 4, **dadurch gekennzeichnet, dass** eine Shore B-Härte des Kunststoffmaterials wenigstens 50 ist.

6. Gummiraupenfahrwerk nach Anspruch 4 oder 5, **dadurch gekennzeichnet, dass** das Kunststoffmaterial im Wesentlichen härter als die Gummiraupe (7) ist.

7. Gummiraupenfahrwerk nach einem der vorangehenden Ansprüche 4 bis 6, **dadurch gekennzeichnet, dass** das Kunststoffmaterial im Wesentlichen härter als die Gummierung (G) der Räder ist.

8. Gummiraupenfahrwerk nach einem der vorangehenden Ansprüche, **dadurch gekennzeichnet, dass** der Einsatz (11) aus einem Material gebildet ist, das einen geringeren Wärmeleitkoeffizienten als Gusseisen hat.

9. Gummiraupenfahrwerk nach einem der Ansprüche 1 bis 7, **dadurch gekennzeichnet, dass** der Einsatz (11) ein Edelstahlmaterial beinhaltet.

10. Gummiraupenfahrwerk nach einem der vorangehenden Ansprüche, **dadurch gekennzeichnet, dass** der Einsatz (11) eine Schmierung aufweist.

11. Gummiraupenfahrwerk nach einem der vorangehenden Ansprüche, **dadurch gekennzeichnet, dass** der Einsatz (11) eine Eigenschmierung aufweist.

12. Gummiraupenfahrwerk nach einem der vorangehenden Ansprüche, **dadurch gekennzeichnet, dass** der Einsatz (11) Graphit aufweist.

13. Gummiraupenfahrwerk nach einem der vorangehenden Ansprüche, **dadurch gekennzeichnet, dass** eine Materialschicht (14) zwischen dem Einsatz (11) und der Felge (9) vorgesehen ist, wobei die Materialschicht (14) aus einem Material gebildet ist, welches einen geringeren Wärmeleitkoeffizienten als der Einsatz (11) oder als Gusseisen hat.

14. Baumaschine in Form eines Straßenfertigers (2) oder in Form eines Beschickerfahrzeugs (3), die ein Gummiraupenfahrwerk (1) nach einem der vorangehenden Ansprüche aufweist.
